# EUROPEAN PATENT APPLICATION

(11) **EP 3 780 717 A1**
(43) Date of publication of application: **17.02.2021**
(21) Application number: 18913808.4
(22) Date of filing: 04.04.2018
(51) Int. Cl.: H04W 28/04, H04W 28/06

(54) **USER TERMINAL AND WIRELESS BASE STATION**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2018/014490
(87) International publication number: WO 2019/193700

(57) **Abstract**

A user terminal according to an aspect of the present disclosure includes a receiving section that receives downlink control information for releasing semi-persistent scheduling (SPS) of a downlink shared channel, and a control section, wherein if a reception of no more than one unicast downlink shared channel per slot is supported, a semi-static Hybrid Automatic Repeat reQuest Acknowledgement (HARQ-ACK) codebook is configured, and the SPS is configured, then the control section generates one HARQ-ACK bit for reception of the downlink control information. According to one aspect of the present disclosure, it is possible to appropriately transmit an HARQ-ACK even when semi-static HARQ-ACK codebook is configured.

## Description

### Technical Field

The present disclosure relates to a user terminal and a radio base station in next-generation mobile communication systems.

### Background Art

In the UMTS (Universal Mobile Telecommunications System) network, the specifications of Long Term Evolution (LTE) have been drafted for the purpose of further increasing high speed data rates, providing lower latency and so on (Non-Patent Literature 1). For the purpose of further high capacity, advancement of LTE (LTE Rel. 8, Rel. 9) and so on, the specifications of LTE-A (LTE-Advanced, LTE Rel. 10, Rel. 11, Rel. 12, Rel. 13) have been drafted.

Successor systems of LTE (also referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems (for example, LTE Rel. 8 to Rel. 13), a user terminal (UE (User Equipment)) transmits uplink control information (UCI) by using at least one of a UL data channel (for example, a PUSCH (Physical Uplink Shared Channel)) and a UL control channel (for example, a PUCCH (Physical Uplink Control Channel)).

The UCI may include, for example, retransmission control information (also referred to as an "HARQ-ACK (Hybrid Automatic Repeat reQuest Acknowledgement)," an "ACK/NACK," an "A/N," and the like), a scheduling request (SR), channel state information (CSI), and the like for a downlink shared channel (PDSCH (Physical Downlink Shared Channel)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

A study is underway for NR that a UE uses semi-static HARQ-ACK codebook. For NR, a study is also underway to configure semi-persistent scheduling (SPS) for a UE to activate or a deactivate (release) transmission and/or reception using this configuration.

However, in a case where a UE is to receive a PDSCH and an SPS release in the same slot, it is not possible to appropriately perform HARQ-ACK transmission by using processes by a UE that have been under study previously. This may degrade communication throughput, frequency use efficiency, and the like.

Thus, an object of the present disclosure is to provide a user terminal and a radio base station with which an HARQ-ACK can be transmitted appropriately even when semi-static HARQ-ACK codebook is configured.

### Solution to Problem

A user terminal according to an aspect of the present disclosure includes a receiving section that receives downlink control information for releasing semi-persistent scheduling (SPS) of a downlink shared channel, and a control section, wherein if a reception of no more than one unicast downlink shared channel per slot is supported, a semi-static Hybrid Automatic Repeat reQuest Acknowledgement (HARQ-ACK) codebook is configured, and the SPS is configured, then the control section generates one HARQ-ACK bit for reception of the downlink control information. Advantageous Effects of Invention

According to one aspect of the present disclosure, it is possible to appropriately transmit an HARQ-ACK even when semi-static HARQ-ACK codebook is configured.

### Brief Description of Drawings

FIG. 1 is a diagram to show an example in which a PDSCH scheduled by using a PDCCH and a PDCCH for an SPS PDSCH release occur in the same slot;
FIGS. 2A and 2B are diagrams to show examples of a period for generating an HARQ-ACK bit for an SPS PDSCH release according to one embodiment;
FIG. 3 is a diagram to show an example of a schematic structure of a radio communication system according to one embodiment;
FIG. 4 is a diagram to show an example of an overall structure of a radio base station according to one embodiment;
FIG. 5 is a diagram to show an example of a functional structure of the radio base station according to one embodiment;
FIG. 6 is a diagram to show an example of an overall structure of a user terminal according to one embodiment;
FIG. 7 is a diagram to show an example of a structure of a user terminal according to one embodiment; and
FIG. 8 is a diagram to show an example of a hardware structure of the radio base station and the user terminal according to one embodiment.

### Description of Embodiments

A study is underway for NR that a UE semi-statistically or dynamically determines HARQ-ACK codebook (which may also be referred to as "HARQ-ACK size"). A base station may report a UE about information indicating a method of determining HARQ-ACK codebook (for example, information indicating HARQ-ACK codebook is semi-static or dynamic), through higher layer signaling. The HARQ-ACK codebook may also be referred to as "HARQ-ACK codebook for a PDSCH."

Here, for example, the higher layer signaling may be any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. For example, the broadcast information may be master information blocks (MIBs), system information blocks (SIBs), minimum system information (RMSI (Remaining Minimum System Information)), other system information (OSI), and the like.

When it is configured that the UE semi-statically determines HARQ-ACK codebook (or semi-static HARQ-ACK codebook is configured), this determination of HARQ-ACK codebook may be referred to as "Type-1 HARQ-ACK codebook determination." When it is configured that the UE dynamically determines HARQ-ACK codebook (or dynamic HARQ-ACK codebook is configured), this determination of HARQ-ACK codebook may be referred to as "Type-2 HARQ-ACK codebook determination."

In Type-1 HARQ-ACK codebook determination, the UE may determine the number of HARQ-ACK bits and the like, based on a configuration set up through higher layer signaling. The set-up configuration may include, for example, the number (for example, the maximum number, the minimum number, or the like) of DL transmissions (for example, PDSCHs) scheduled in a range associated with HARQ-ACK feedback timing.

The range is also referred to as an "HARQ-ACK bundling window," an "HARQ-ACK feedback window," a "bundling window," a "feedback window," and the like. The bundling window may correspond to at least one range of space, time, and frequency.

In contrast, in Type-2 HARQ-ACK codebook determination, the UE may determine the number of HARQ-ACK bits and the like, based on a bit string in a DL assignment index (DAI (Downlink Assignment Indicator)) field included in downlink control information (for example, DL assignment).

The UE may determine (generate) HARQ-ACK information bits, based on the determined HARQ-ACK codebook, and transmit a generated HARQ-ACK by using at least one of an uplink control channel (PUCCH (Physical Uplink Control Channel)) and an uplink shared channel (PUSCH (Physical Uplink Shared Channel)).

The UE may transmit, for example, to a base station, capability information indicating the number of unicast PDSCHs receivable in each slot (or per slot).

In a case that semi-static HARQ-ACK codebook is configured for the UE and that the UE transmits capability information indicating that the UE receives more than one unicast PDSCH per slot, the UE may determine the maximum number of non-overlapping candidate unicast PDSCH occasions per slot, based on a configured table.

The table may be, for example, a table (SLIV (Start and length indicator value)) table in which a plurality of candidates (entries) for a combination of a PDSCH start symbol (S) and data length (L), and this table may be configured using an information element related to PDSCH symbol allocation (for example, "pdsch-symbolAllocation" information element).

In a case that semi-static HARQ-ACK codebook is configured for the UE and that the UE does not transmit capability information indicating that the UE receives more than one unicast PDSCH per slot (or transmits capability information indicating that the UE receives one unicast PDSCH), the UE may assume to receive only one unicast PDSCH per slot, and an HARQ-ACK association set may assume one unicast PDSCH per slot.

By adopting such a configuration, it is possible to reduce the number of HARQ-ACK bits to be generated by the UE, even when configured semi-static HARQ-ACK codebook is large (the number of receivable PDSCH occasions is large).

There exists not only an HARQ-ACK for a PDSCH as that described above but also an HARQ-ACK for a PDCCH for releasing semi-persistent scheduling (SPS). The HARQ-ACK may be referred to as an "HARQ-ACK for an SPS PDSCH release."

For the UE, for example, a cyclic resource for SPS may be configured through higher layer signaling, and at least one of transmission and reception using the resource may be activated or deactivated (released) by downlink control information (DCI) reported by using a PDCCH.

A PDCCH (DCI) for SPS may be CRC (Cyclic Redundancy Check) scrambled with a RNTI (Radio Network Temporary Identifier) for SPS. The RNTI for SPS may be referred to as a "CS-RNTI (Configured Scheduling RNTI)."

Note that a PDCCH (DCI) for data scheduling (PDSCH or PUSCH scheduling) may be CRC-scrambled with a C-RNTI (Cell-RNTI).

Note that, although a description will be given by assuming that SPS is SPS for downlink data (which may be referred to as "DL SPS," a "SPS PDSCH," and the like) in the following, SPS may be interpreted as "SPS for uplink data" (which may be referred to as "UL SPS," a "SPS PUSCH," and the like).

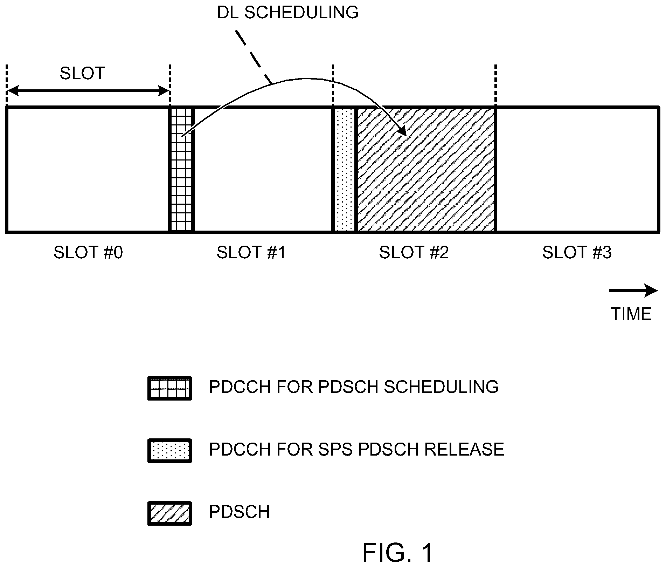

It is assumed, in NR, that a PDSCH scheduled by using a PDCCH and a PDCCH for an SPS PDSCH release occur in the same slot. FIG. 1 is a diagram to show an example in which a PDSCH scheduled by using a PDCCH and a PDCCH for an SPS PDSCH release occur in the same slot.

In this example, the UE receives, in slot #1, a PDCCH for scheduling a PDSCH in slot #2. The UE receives a PDCCH for an SPS PDSCH release in slot #2. The UE receives, in slot #2, a PDSCH scheduled by the PDCCH in slot #1.

A study is underway for NR of the current state that, in a case that a UE supports up to one unicast PDSCH per slot and that semi-static HARQ-ACK codebook is configured and an SPS PDSCH is configured, the UE generates an HARQ-ACK bit for only one of a PDSCH and an SPS PDSCH release for a certain slot timing value (that is, per slot).

In this situation, in a case where a PDSCH and an SPS PDSCH release occur in the same slot as shown in FIG. 1, it is not possible for a UE that has been studied previously to appropriately perform HARQ-ACK transmission. This may degrade communication throughput, frequency use efficiency, and the like.

Thus, the inventors of the present invention came up with the idea of a configuration and related operations for appropriately transmitting an HARQ-ACK even when semi-static HARQ-ACK codebook is configured.

Embodiments according to the present disclosure will be described in detail with reference to the drawings as follows. A radio communication method according to each embodiment may be employed independently or may be employed in combination.

The following descriptions of the embodiments are given by assuming a case that a UE supports no more than one unicast PDSCH per slot and that semi-static HARQ-ACK codebook is configured and an SPS PDSCH is configured. The case may be referred to as an "assumed case," a "concerned case," and the like. Note that the following embodiments may be employed even when this case is not assumed.

In the present disclosure, a "SPS PDSCH release" may refer to a "PDCCH for an SPS PDSCH release."

### (Radio Communication Method)

### <First Embodiment>

In a first embodiment, a UE generates one HARQ-ACK bit for an SPS PDSCH release per slot.

In a case that an SPS PDSCH is configured for the UE for a certain serving cell and that the UE monitors a PDCCH that is for an SPS PDSCH release and is CRC-scrambled with a CS-RNTI, the UE generates an HARQ-ACK bit for an SPS PDSCH release in each slot.

Here, each slot in which an HARQ-ACK bit for an SPS PDSCH release is generated may be each of all the slots in the serving cell or may be each slot (for example, each slot including at least one DL symbol including a control resource set (CORESET)) in which decoding of at least one PDCCH candidate is performed (monitored) in the serving cell. In the latter case, for example, no HARQ-ACK bit need to be generated for a slot in which all the 14 symbols are configured for UL, which can consequently reduce the overhead.

Each slot described above may be a slot in which a PDCCH that is for an SPS PDSCH release in the serving cell and is CRC-scrambled with a CS-RNTI is monitored. In this case, no HARQ-ACK bit need to be generated for a slot in which the PDCCH is not monitored, which can consequently reduce the overhead.

Alternatively, each slot described above may be a slot identified (specified) by a combination of the above (for example, among slots in which decoding of at least one PDCCH candidate is performed in the serving cell, a slot in which a PDCCH that is for releasing an SPS PDSCH in the serving cell and is CRC-scrambled with a CS-RNTI is monitored).

When one TB is scheduled for a unicast PDSCH, or when a plurality of (for example, two) TBs are scheduled for a unicast PDSCH and spatial bundling is effective, the UE may generate two HARQ-ACK bits for one slot for a serving cell. Here, one of the two HARQ-ACK bits is for the unicast PDSCH, and the other is for an SPS PDSCH release.

Otherwise (for example, a plurality of (for example, two) TBs are scheduled for a unicast PDSCH and spatial bundling is not effective), the UE may generate HARQ-ACK bits corresponding to 1 + the number of TBs (for example, if the number of TBs is two, 1 + 2 = 3) for one slot for a serving cell. Here, the HARQ-ACK bits corresponding to the number of TBs out of 1 + the number of Tbs may be for the unicast PDSCH, and the remaining one may be for an SPS PDSCH release.

Note that the UE may determine the number of TBs to be scheduled by a scheduling PDCCH, based on information included in the PDCCH or a different kind of information (for example, information reported through higher layer signaling). For example, in a case that MIMO (Multi Input Multi Output) is configured or that a transmission mode for MIMO is employed, the UE may determine that a plurality of TBs are scheduled by a scheduling PDCCH.

According to the above-described first embodiment, it is possible for a UE to appropriately carry out generation of an HARQ-ACK for a PDSCH and generation of an HARQ-ACK for an SPS PDSCH release for each slot.

### <Variation of First Embodiment>

The UE may generate one HARQ-ACK bit for an SPS PDSCH for each slot while bundling, when one TB is scheduled, an HARQ-ACK for a PDSCH and an HARQ-ACK for an SPS PDSCH release to thereby eventually transmit one HARQ-ACK bit as feedback.

When two TBs are scheduled and spatial bundling is not effective, the UE may transmit, as feedback, two HARQ-ACK bits in total, i.e., one bit obtained by bundling an HARQ-ACK for a first TB (one of the two TBs, for example the first TB) and an HARQ-ACK for an SPS PDSCH release and one HARQ-ACK bit for a second TB (the other one of the two TBs, for example, the second TB).

According to the above-described variation of the first embodiment, it is possible for a UE to report about an HARQ-ACK for a PDSCH and an HARQ-ACK for an SPS PDSCH release for each slot by using a smaller number of bits through bundling.

### <Second Embodiment>

In a second embodiment, a UE need not necessarily predict (assume) reception of both a PDSCH and an SPS PDSCH release in the same slot, in a concerned case.

In this case, the UE just need generate, for a slot in which a unicast PDSCH is scheduled, an HARQ-ACK for the PDSCH. For the slot, the UE need not necessarily generate an HARQ-ACK for an SPS PDSCH release (may, for example, omit or ignore a generation process).

For a slot in which no unicast PDSCH is scheduled and a PDCCH for an SPS PDSCH release is detected, the UE just need generate an HARQ-ACK for the SPS PDSCH release. For the slot, the UE need not necessarily generate an HARQ-ACK for a unicast PDSCH (may, for example, omit or ignore a generation process).

For a slot in which no unicast PDSCH is scheduled and a PDCCH for no SPS PDSCH release is detected, the UE just need generate an HARQ-ACK for a unicast PDSCH.

According to the above-described second embodiment, it is possible to agree with what is currently studied in a concerned case, that is, only one HARQ-ACK bit is generated for either one of a PDSCH and an SPS PDSCH release for each slot.

### <Other Embodiments>

In a concerned case, a UE may transmit, when receiving both a PDSCH and an SPS PDSCH release in the same slot, two HARQ-ACK bits for these, while transmitting up to one HARQ-ACK bit otherwise.

In other words, the UE may normally transmit one HARQ-ACK bit for a unicast PDSCH while transmitting two HARQ-ACK bits when an SPS PDSCH release occurs. With this configuration, it is in a way considered that, even when semi-static HARQ-ACK codebook is configured for the UE, dynamic HARQ-ACK codebook is used depending on whether or not an SPS PDSCH release is to be performed.

The UE may transmit a MAC CE by using a PUSCH, for an ACK of an SPS PDSCH release. In this case, an HARQ-ACK for a unicast PDSCH and an HARQ-ACK for the SPS PDSCH release need not necessarily be transmitted on the same channel at the same time.

The MAC CE for an ACK of an SPS PDSCH release may be a MAC CE different from an existing MAC CE. The MAC CE may be identified using a subheader of a MAC PDU (Protocol Data Unit) having a LCID (Logical Channel Identifier) corresponding to the MAC CE. The size of the MAC CE may be zero.

An existing MAC CE (for example, a MAC CE for configured grant confirmation (or activation) (Configured Grant Confirmation MAC CE)) may be interpreted as the MAC CE for an ACK of an SPS PDSCH release to be used. For example, a UE for which SPS is configured and no configured grant is configured may use a MAC CE for confirmation of a configured grant, as a MAC CE for an ACK of an SPS PDSCH release.

Note that the UE operations in each of the above-described embodiments including the first embodiment may be employed when semi-static HARQ-ACK codebook is configured and an SPS PDSCH is configured for a UE, or may be employed when semi-static HARQ-ACK codebook is configured for a UE and one or more SPS PDSCHs are active.

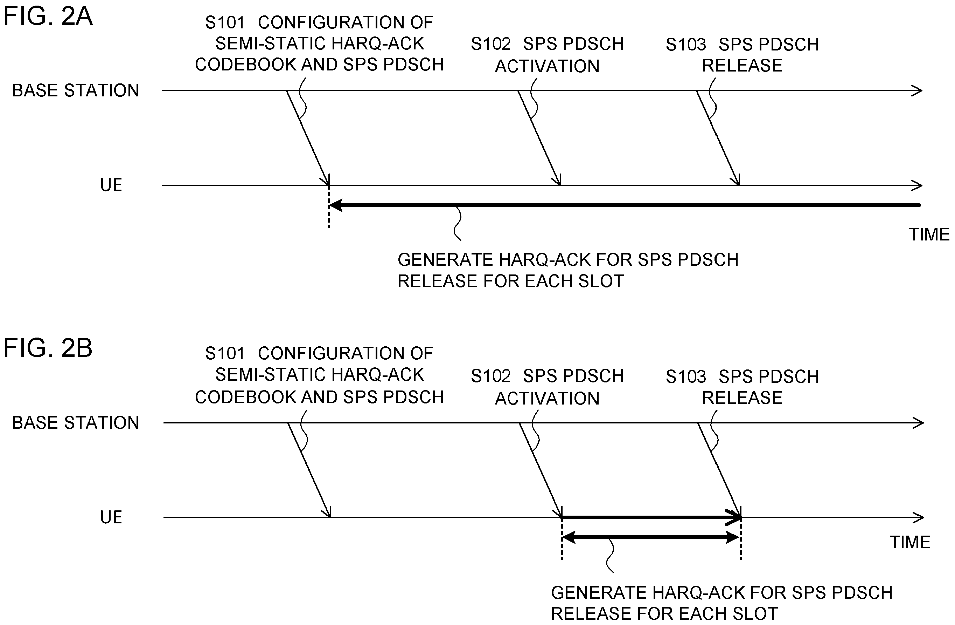

FIGS. 2A and 2B are diagrams to show examples of a period for generating an HARQ-ACK bit for an SPS PDSCH release according to one embodiment. Both of the examples illustrate a flow in which a base station configures semi-static HARQ-ACK codebook and SPS for a UE (Step S101), thereafter performs SPS PDSCH activation (Step S102), and further performs an SPS PDSCH release (Step S103). It is assumed that the UE supports up to one unicast PDSCH for one slot.

Note that, in Step S101, configuration of semi-static HARQ-ACK codebook and configuration of SPS may be carried out at different timings. The terminal point of the arrow of Step S101 in each drawing may correspond to the timing at which both of the configurations are completed.

In FIG. 2A, when semi-static HARQ-ACK codebook is configured and an SPS PDSCH is configured for the UE (in other words, after completion of Step S101), the UE may generate an HARQ-ACK for an SPS PDSCH release for each slot irrespective of whether or not the SPS PDSCH is activated.

In FIG. 2B, when semi-static HARQ-ACK codebook is configured and an SPS PDSCH is configured for the UE and further the SPS PDSCH is activated (in other words, in the period from Steps S102 to Step S103), the UE may generate an HARQ-ACK for an SPS PDSCH release for each slot. In FIG.2B, for example, in the period from Steps S101 to S102, the UE may simply generate an HARQ-ACK for a PDSCH for each slot.

Note that an SPS PDSCH being configured or SPS being configured for a UE may be interpreted as "PDCCH monitoring for activating or releasing an SPS PDSCH being configured for a UE."

Generation of an HARQ-ACK-ACK in the present disclosure may be expressed as transmission, determination, identification, and the like of an HARQ-ACK. An HARQ-ACK in the present disclosure may be expressed as an "ACK," a "NACK," an "A/N," and the like. An HARQ-ACK bit and an HARQ-ACK in the present disclosure may be interpreted as one another.

A base station may perform an HARQ-ACK reception process (decoding and the like) by assuming the UE operations in each of the above-described embodiments including the first embodiment. For example, for a 2-bit HARQ-ACK transmitted from a UE that supports up to one unicast PDSCH per slot and for which semi-static HARQ-ACK codebook is configured and an SPS PDSCH is configured, the base station may assume that one bit of the HARQ-ACK is for a unicast PDSCH and the other one bit is for an SPS PDSCH release.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

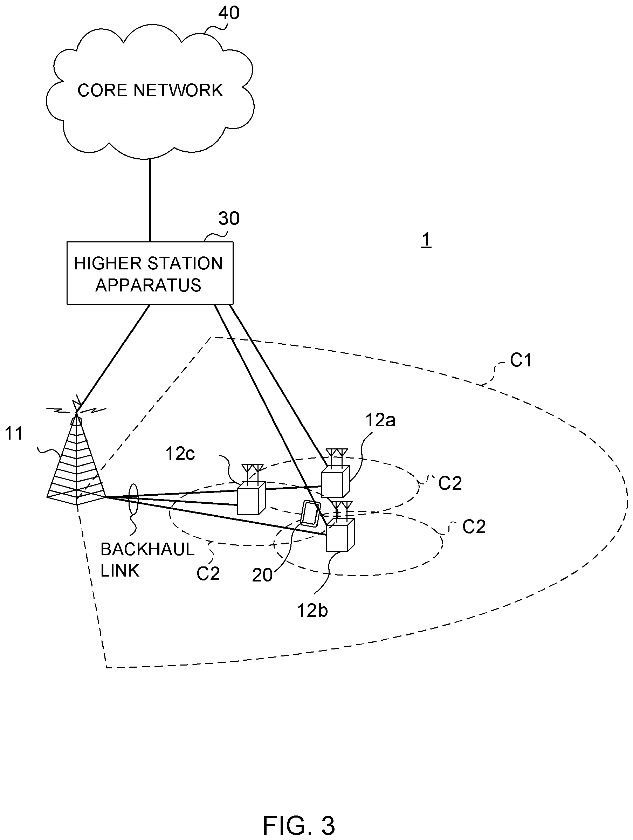

FIG. 3 is a diagram to show an example of a schematic structure of the radio communication system according to one embodiment. A radio communication system 1 can adopt at least one of carrier aggregation (CA) and dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 can execute CA or DC by using a plurality of cells (CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using at least one of time division duplex (TDD) and frequency division duplex (FDD) in each cell. Furthermore, in each cell (carrier), a single numerology may be employed, or a plurality of different numerologies may be employed.

Numerologies may be communication parameters applied to at least one of transmission and reception of a certain signal or channel, and, for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on.

For example, if certain physical channels use at least one of different subcarrier spacings of the OFDM symbols constituted and different numbers of the OFDM symbols, it may be referred to as "the numerologies are different."

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and at least one of single carrier frequency division multiple access (SC-FDMA) and OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink control channels, and so on, are used as downlink channels. User data, higher layer control information, SIBs (System Information Blocks), and so on are communicated on the PDSCH. The MIBs (Master Information Blocks) are communicated on the PBCH.

The downlink control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI) including scheduling information for at least one of a PDSCH and a PUSCH and so on are communicated on the PDCCH.

Note that the DCI scheduling DL data reception may be referred to as "DL assignment," and the DCI scheduling UL data transmission may be referred to as "UL grant."

The number of OFDM symbols to use for the PDCCH may be communicated on the PCFICH. Transmission confirmation information (for example, also referred to as "retransmission control information," an "HARQ-ACK," an "ACK/NACK," and so on) of HARQ (Hybrid Automatic Repeat reQuest) to a PUSCH may be transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

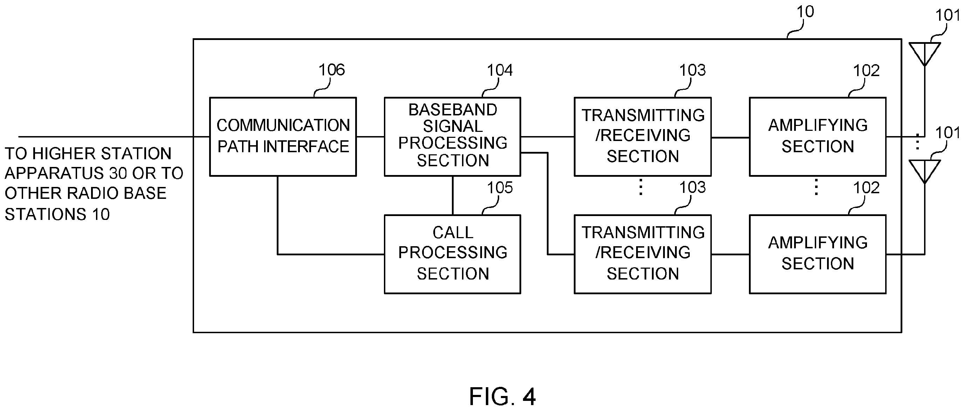

FIG. 4 is a diagram to show an example of an overall structure of the radio base station according to one embodiment. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing and so on) for communication channels, manages the state of the radio base station 10, manages the radio resources and so on.

The transmission line interface 106 transmits and/or receives signals to and/or from the higher station apparatus 30 via a certain interface. The transmission line interface 106 may transmit and/or receive signals (backhaul signaling) with other radio base stations 10 via an inter-base station interface (for example, an optical fiber in compliance with the CPRI (Common Public Radio Interface) and an X2 interface).

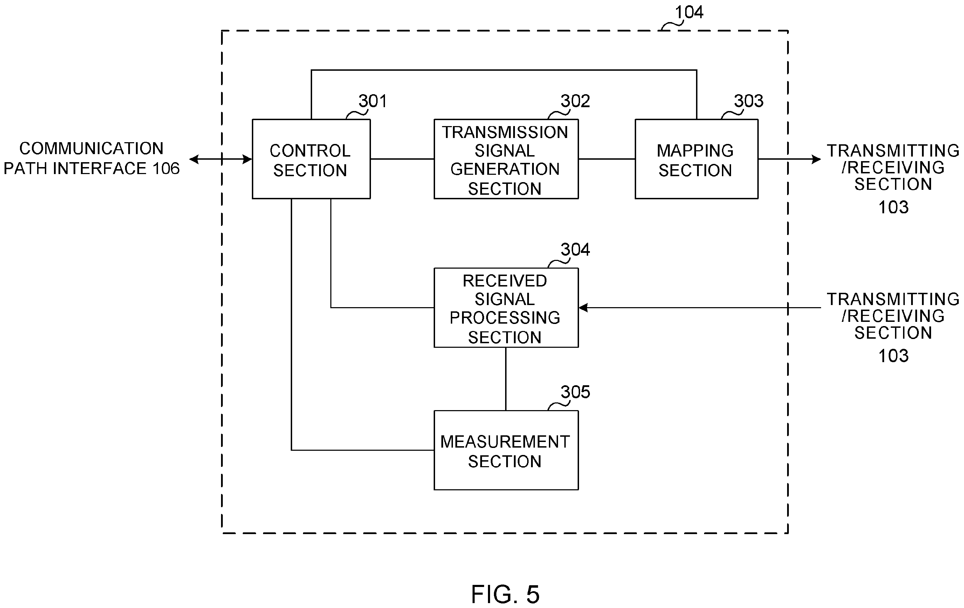

FIG. 5 is a diagram to show an example of a functional structure of the radio base station according to one embodiment of the present disclosure. Note that, the present example primarily shows functional blocks that pertain to characteristic parts of the present embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures need not be included in the baseband signal processing section 104.

The control section (scheduler) 301 controls the whole of the radio base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on a downlink shared channel), and a downlink control signal (for example, a signal transmitted on a downlink control channel). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls scheduling of uplink data signals (for example, a signal transmitted on an uplink shared channel), uplink control signals (for example, a signal transmitted on an uplink control channel), random access preambles, uplink reference signals, and the like.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates at least one of DL assignment to report assignment information of downlink data and UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs at least one of the received signals and the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

Note that the transmitting/receiving sections 103 may transmit downlink control information (DCI) for releasing semi-persistent scheduling (SPS) of a downlink shared channel (PDSCH).

When a certain user terminal 20 supports reception of up to one unicast downlink shared channel (PDSCH) per slot, and semi-static HARQ-ACK codebook is configured and SPS (for example, an SPS PDSCH) is configured, the transmitting/receiving sections 103 may receive one HARQ-ACK bit generated for reception of DCI indicating an SPS PDSCH release in the user terminal 20.

The control section 301 may perform control to perform an HARQ-ACK reception process (decoding and the like) on the HARQ-ACK bit received from the user terminal 20, by assuming the UE operations of at least one of the previously described embodiments.

### (User Terminal)

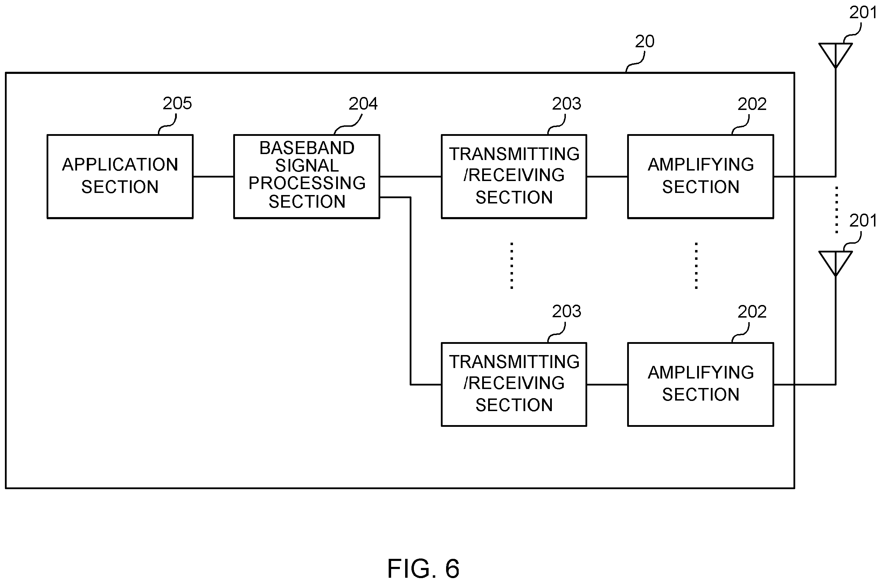

FIG. 6 is a diagram to show an example of an overall structure of a user terminal according to one embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

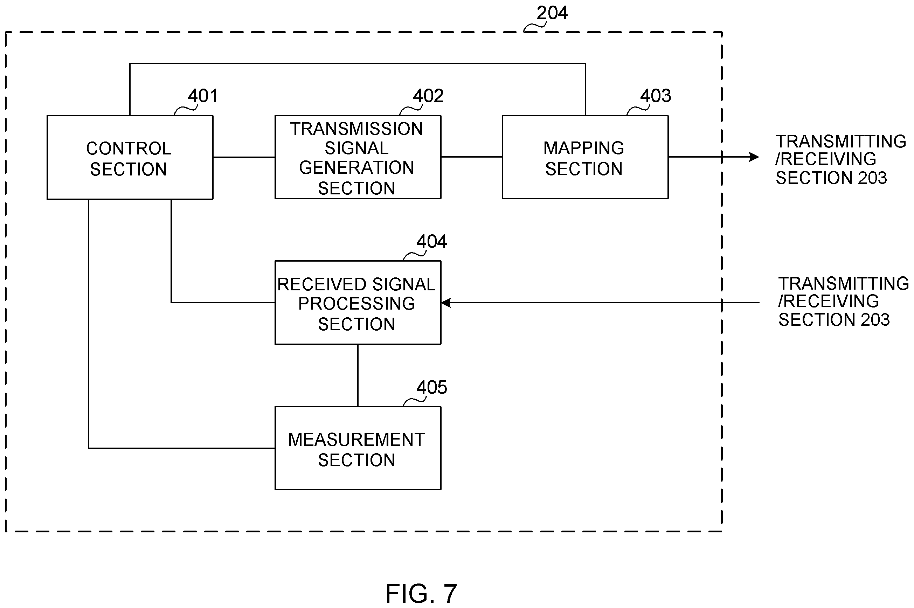

FIG. 7 is a diagram to show an example of a functional structure of a user terminal according to one embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures need not be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal, a downlink data signal, and the like transmitted from the radio base station 10, from the received signal processing section 404. The control section 401 controls generation of an uplink control signal. an uplink data signal, and the like, based on the result of determining necessity or not of retransmission control to the downlink data signal, the downlink control signal, and the like.

If the control section 401 acquires a variety of information reported by the radio base station 10 from the received signal processing section 404, the control section 401 may update parameters to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs at least one of the received signals and the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

Note that the transmitting/receiving sections 203 may receive downlink control information (DCI) for releasing semi-persistent scheduling (SPS) of a downlink shared channel (PDSCH).

When the user terminal 20 supports reception of up to one unicast downlink shared channel (PDSCH) per slot, and semi-static HARQ-ACK codebook is configured and SPS (for example, an SPS PDSCH) is configured, the control section 401 may generate one HARQ-ACK bit for reception of downlink control information (DCI) indicating an SPS PDSCH release.

Note that supporting reception of up to one unicast downlink shared channel per slot may be interpreted as "transmitting capability information indicating that reception of up to one unicast downlink shared channel per slot is supported."

The control section 401 may generate, in each slot, one or a plurality of HARQ-ACK bits for reception of the unicast downlink shared channel and the DCI indicating the SPS PDSCH release.

The control section 401 need not necessarily assume reception of both the unicast downlink shared channel and the DCI indicating the SPS PDSCH release in the same slot.

The control section 401 may generate, in a case of receiving both the unicast downlink shared channel and the DCI indicating the SPS PDSCH release in the same slot, two HARQ-ACK bits for the reception, while generating one HARQ-ACK bit otherwise.

The control section 401 may transmit an HARQ-ACK by using a MAC control element for reception of the DCI indicating the SPS PDSCH release.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus.

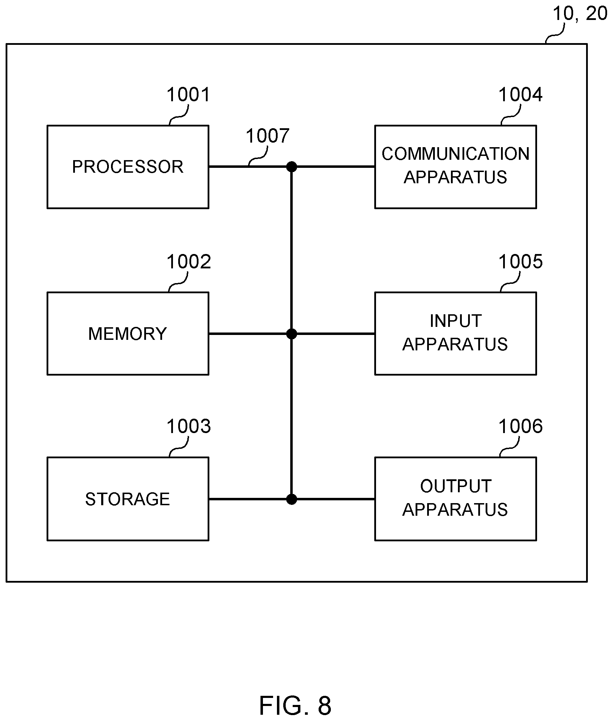

For example, a radio base station, a user terminal, and so on according to one embodiment of the present disclosure may function as a computer that executes the processes of the radio communication method of the present disclosure. FIG. 8 is a diagram to show an example of a hardware structure of the radio base station and the user terminal according to one embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of a wired network and a wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, at least one of "channels" and "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH and a PUSCH transmitted in a time unit larger than a mini-slot may be referred to as "PDSCH/PUSCH mapping type A." A PDSCH and a PUSCH transmitted using a mini-slot may be referred to as "PDSCH/PUSCH mapping type B."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, codewords, or the like or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a "TTI," one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a "TTI having a time length exceeding 1 ms," and a short TTI (for example, a shortened TTI and so on) may be interpreted as a "TTI having a TTI length shorter than the TTI length of a long TTI and equal to or longer than 1 ms."

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," a "bandwidth part (BWP)," and so on can be used interchangeably. The base station may be referred to as the terms such as a "macro cell," a "small cell," a "femto cell," a "pico cell," and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" and so on may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation.

Furthermore, the radio base station in the present disclosure may be interpreted as a user terminal. For example, each aspect/embodiment of the present disclosure may be applied to the structure that replaces a communication between a radio base station and a user terminal with a communication between a plurality of user terminals (which may, for example, be referred to as "D2D (Device-to-Device)," "V2X (Vehicle-to-Everything)," and the like). In this case, the user terminals 20 may have the functions of the radio base stations 10 described above. The words "uplink" and "downlink" may be interpreted as the words corresponding to the terminal-to-terminal communication (for example, "side"). For example, an uplink channel may be interpreted as a "side channel."

Likewise, the user terminal in the present disclosure may be interpreted as a "radio base station." In this case, the radio base stations 10 may have the functions of the user terminals 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." The terms "separate," "be coupled" and so on may be interpreted similarly.

When terms such as "include," "including," and variations of these are used in the present disclosure or in claims, these terms are intended to be inclusive, in a manner similar to the way the term "comprising" is used. Furthermore, the term "or" as used in the present disclosure or in claims is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives downlink control information for releasing semi-persistent scheduling (SPS) of a downlink shared channel; and
a control section, wherein if a reception of no more than one unicast downlink shared channel per slot is supported, a semi-static Hybrid Automatic Repeat reQuest Acknowledgement (HARQ-ACK) codebook is configured, and the SPS is configured, then the control section generates one HARQ-ACK bit for reception of the downlink control information.

2. The user terminal according to claim 1, wherein
the control section generates, in each slot, one or a plurality of HARQ-ACK bits for reception of the unicast downlink shared channel and the downlink control information.

3. The user terminal according to claim 1, wherein
the control section does not assume reception of both the unicast downlink shared channel and the downlink control information in a same slot.

4. The user terminal according to claim 1, wherein
the control section generates, in a case of receiving both the unicast downlink shared channel and the downlink control information in a same slot, two HARQ-ACK bits for the reception, while generating one HARQ-ACK bit otherwise.

5. The user terminal according to claim 1, wherein
the control section performs control for transmitting an HARQ-ACK in response to reception of the downlink control information by using a MAC (Medium Access Control) control element.

6. A radio base station comprising:
a transmitting section that transmits, to a user terminal, downlink control information for releasing semi-persistent scheduling (SPS) of a downlink shared channel; and
a receiving section that receives one HARQ-ACK bit generated for reception of the downlink control information in the user terminal in a case that the user terminal supports reception of up to one unicast downlink shared channel per slot and that semi-static HARQ-ACK (Hybrid Automatic Repeat reQuest Acknowledgement) codebook is configured and the SPS is configured for the user terminal.
